# EUROPÄISCHE PATENTSCHRIFT

(11) **EP 0 797 643 B1**
(45) Veröffentlichungstag und Bekanntmachung des Hinweises auf die Patenterteilung: **13.01.1999**
(21) Anmeldenummer: 95919375.6
(22) Anmeldetag: 03.05.1995
(51) Int. Cl.: C09D 175/04

(54) **BINDEMITTELZUSAMMENSETZUNG, DIESE ENTHALTENDE ÜBERZUGSMITTEL, DEREN HERSTELLUNG UND VERWENDUNG**
BINDER COMPOSITION, A COATING AGENT CONTAINING SAID BINDER COMPOSITION, ITS PRODUCTION AND USE
COMPOSITION DE LIANT, AGENT DE REVETEMENT LA CONTENANT, SA PRODUCTION ET SON UTILISATION

(30) Priorität: 07.05.1994 DE 4416282
(43) Veröffentlichungstag der Anmeldung: 01.10.1997
(73) Patentinhaber: Herberts Gesellschaft mit beschränkter Haftung, 42285 Wuppertal (DE)
(72) Erfinder: DUECOFFRE, Volker, D-42119 Wuppertal (DE); FLOSBACH, Carmen, D-42115 Wuppertal (DE); HERRMANN, Friedrich, D-42117 Wuppertal (DE); REIFFERSCHEIDT, Heinz-Walter, D-44803 Bochum (DE); SCHUBERT, Walter, D-42349 Wuppertal (DE)
(74) Vertreter: Hrabal, Ulrich, Dr.
(86) Internationale Anmeldenummer: EP9501663
(87) Internationale Veröffentlichungsnummer: WO9530719

(56) Entgegenhaltungen:
- EP-A- 0 230 774

## Beschreibung

Die Erfindung betrifft Bindemittelzusammensetzungen, die zur Herstellung von Überzugsmitteln geeignet sind, die bei erhöhter Temperatur eingebrannt werden und insbesondere zur Herstellung von Mehrschichtlackierungen, beispielsweise auf dem Kraftfahrzeugsektor, geeignet sind.

Aus der DE-A-30 22 996 ist ein Einbrennlack bekannt, bei dem carboxylgruppenhaltige Polymere, wie z.B. Acrylate auf Basis Acrylsäure oder Methacrylsäure und glycidylgruppenhaltiger Acrylate zu einer härtbaren Zusammensetzung vermischt sind.

In der WO 84/00771 ist ein Mehrkomponentensystem beschrieben, bei dem vier Bindemitteltypen miteinander vermischt und dann appliziert werden. Bei den Komponenten handelt es sich um hydroxylgruppenhaltiges Acrylat, Säureanhydrid, wobei mindestens 50 % Alkylhexahydrophthalsäureanhydride sind, Epoxidharz und Melaminharz. Die Systeme weisen einen hohen Festkörpergehalt auf.

In der DE-A-23 33 384 wird ein Bindemittel auf der Basis acrylierter Polyester beschrieben, die durch Polymerisation eines hydroxylgruppenhaltigen Acrylates in einem hydroxylgruppenhaltigen Polyester oder Alkydharz erhalten werden. Die Vernetzung kann mit Melaminharzen und gleichzeitig Epoxidharzen durchgeführt werden.

In der DE-A-38 00 389 wird die Modifizierung von Hydroxylgruppen aufweisenden Copolymerisaten mit Lactonen beschrieben, insbesondere mit epsilon-Caprolacton.

In der US-A-4 501 829 werden Polyester mit Hydroxyl- und Carboxylgruppen beschrieben, die mit Lactonen umgesetzt werden. Die Reaktion erfolgt an den Hydroxylgruppen. In der US-A-4 082 816 werden Zusammensetzungen aus mit Caprolacton modifizierten carboxylgruppenhaltigen (Meth)acrylcopolymeren und Melamin-Formaldehydharzen beschrieben.

In der noch nicht veröffentlichten deutschen Patentanmeldung P 42 37 658 werden Bindemittelzusammensetzungen beschrieben, die sich aus Lacton-modifizierten carboxygruppenhaltigen Polyacrylaten bzw. Polyestern und glycidylgruppenhaltigen Polymeren zusammensetzen. Eine Urethanisierung der sauren Komponenten wird nicht erwähnt.

Die bekannten Überzugsmittel führen teilweise zu Filmen mit hoher Härte und guter Wetterbeständigkeit. Jedoch genügen sie den ständig steigenden Anforderungen an hohe Säurebeständigkeit und Lösemittelresistenz nicht.

Aufgabe der Erfindung ist die Bereitstellung eines Bindemittelsystems, das zu Überzugsmitteln verarbeitet werden kann, die bei erhöhter Temperatur eingebrannt werden können und zu Überzügen mit guter Härte, guter Wetterbeständigkeit und hoher Elastizität führen, die zudem säurebeständig und lösemittelresistent sind. Die Überzugsmittel sollen zudem eine gute Applikationssicherheit (verringerte Ablaufneigung) auch bei hohen Schichtstärken aufweisen.

Es hat sich gezeigt, daß diese Aufgabe gelöst werden kann durch eine Bindemittelzusammensetzung, die einen Gegenstand der Erfindung darstellt und die enthält:
A) 25 bis 75 Gew.-% des Umsetzungsproduktes eines oder mehrerer urethangruppenhaltiger carboxyfunktionalisierter (Meth)acrylcopolymerer und/oder eines oder mehrerer urethangruppenhaltiger carboxyfunktionalisierter Polyester, jeweils mit einer Säurezahl von 30 bis 200 mg KOH/g, mit einem oder mehreren Lactonen,
B) 25 bis 75 Gew.-% eines oder mehrerer epoxidfunktionalisierter Vernetzer mit mindestens zwei Epoxidfunktionen im Mokelül, mit einem Zahlenmittel des Molgewichtes (Mn) von 200 bis 10000 g/mol,
C) ggf. bis 60 Gew.-% eines oder mehrerer Polyole mit mindestens zwei Hydroxylfunktionen im Molekül,
D₁) 0 bis 20 Gew.-% eines oder mehrerer Melaminharze,
D₂) 0 bis 40 Gew.-% eines oder mehrerer freier oder verkappter Polyisocyanate, wobei sich die Summe der Gewichtsprozente der Komponente A), B), C), D₁) und D₂) auf 100 Gew.-% addiert, sowie
E) 0 bis 10 Gew.-% eines oder mehrerer Katalysatoren zur Katalyse der Reaktion von Carboxyl- und Epoxidgruppen, bezogen auf die Summe der Gewichte der Komponenten A) bis D₂).

Es hat sich gezeigt, daß die erfindungsgemäßen Bindemittelzusammensetzungen, bzw. die daraus erstellten Überzugsmittel zu Überzügen führen, die eine hohe Lösemittelbeständigkeit, insbesondere gegenüber Xylol, auch mit einer möglichst reinen Vernetzung zwischen Carboxylgruppen und Epoxidgruppen ergeben, so daß es möglich ist ohne oder nur mit geringen Mengen an Zusatzvernetzern wie Polyisocyanaten und/oder Melaminharzen zu arbeiten.

Gemäß einer bevorzugten Ausführungsform der Erfindung weisen die urethangruppenhaltigen carboxyfunktionalisierten (Meth)acrylcopolymeren, die gemäß Komponente A) mit Lacton umgesetzt werden können, ein Zahlenmittel des Molgewichts (Mn) von 1000 bis 30000 g/mol auf. Die entsprechend einsetzbaren urethangruppenhaltigen carboxyfunktionalisierten Polyester weisen bevorzugt ein errechnetes Molgewicht von 500 bis 4000 g/mol, z.B. 800 bis 4000 g/mol auf. Die Säurezahl dieser Ausgangsmaterialien liegt bei 30 bis 200 mg KOH/g, bevorzugt bei 30 bis 140 mg KOH/g und besonders bevorzugt bei 60 bis 120 mg KOH/g.

Die Erfindung betrifft auch Überzugsmittel, die aus den erfindungsgemäßen Bindemittelzusammensetzungen hergestellt werden können. Es kann sich dabei um wäßrige und/oder lösemittelhaltige Überzugsmittel handeln, die gegebenenfalls Pigmente, Füllstoffe und/oder lackübliche Hilfs- und Zusatzstoffe enthalten können; sie können auch als lösemittel- und wasserfreie Pulverlacke formuliert sein.

In der Komponente A) der erfindungsgemäßen Bindemittel- bzw. Überzugsmittelzusammensetzungen sind die Carboxylgruppen durch Umsetzung mit Lactonen modifiziert. Durch die Anlagerung von Lactonen erfolgt eine "Kettenverlängerung" der Carboxylgruppen. Durch Ringöffnung des anzulagernden Lactons werden die ursprünglich am (Meth)acrylcopolymergerüst und/oder am Polyestergerüst befindlichen Carboxylgruppen verestert, wobei jedoch die Lacton-Carboxylgruppen freigesetzt werden und somit Reaktionsprodukte entstehen, die exponierte Carboxylgruppen an dem Lacton entsprechenden kurzen Seitenketten aufweisen.

Bei der Herstellung der urethan- und carboxylgruppenhaltigen (Meth)acrylcopolymeren bzw. Polyester, die zur Bereitung der Komponente A) eingesetzt werden, können die Carboxylgruppen direkt durch Verwendung carboxylgruppenhaltiger Bausteine, beispielsweise beim Aufbau von Polymeren, wie (Meth)acrylcopolymeren, eingeführt werden. Beispiele für hierzu verwendbare geeignete carboxylgruppenhaltige Monomere sind ungesättigte Carbonsäuren, wie z.B. Acryl-, Methacryl-, Itacon-, Croton, Isocroton-, Aconit-, Malein- und Fumarsäure, Halbester der Malein- und Fumarsäure sowie beta-Carboxyethylacrylat und Addukte von Hydroxyalkylestern der Acrylsäure und/oder Methacrylsäure mit Carbonsäureanhydriden, wie z.B. der Phthalsäure-mono-2-methacryloyloxyethylester.

In der vorliegenden Beschreibung und den Patentansprüchen wird der Ausdruck (Meth)acryl verwendet. Dieser bedeutet Acryl und/oder Methacryl.

Bei der Herstellung der urethan- und carboxylgruppenhaltigen (Meth)acrylcopolymere bzw. Polyester ist es aber auch möglich, zunächst ein hydroxy- und gegebenenfalls carboxylgruppenhaltiges Polymer mit einer OH-Zahl von 30 bis 200 mg KOH/g aufzubauen und die Carboxylgruppen ganz oder teilweise in einer zweiten Stufe durch Umsetzen der Hydroxyl- und gegebenenfalls carboxylgruppenhaltigen Polymeren mit Carbonsäureanhydriden einzuführen. Bei dieser Arbeitsweise muß jedoch mit solchen Mengenverhältnissen gearbeitet werden, daß genügend OH-Gruppen übrig bleiben, um eine Urethanisierung der (Meth)acrylate durchführen zu können.

Für die Addition an die hydroxylgruppenhaltigen Polymeren geeignete Carbonsäureanhydride sind die Anhydride von aliphatischen, cycloaliphatischen und aromatischen gesättigten und/oder ungesättigten Di- und Polycarbonsäuren, wie beispielsweise die Anhydride der Phthalsäure, Tetrahydrophthalsäure, Hexahydrophthalsäure, Bernsteinsäure, Maleinsäure, Itaconsäure, Glutarsäure, Trimellithsäure und Pyromellithsäure sowie deren halogenierte oder alkylierte Derivate.

Bevorzugt eingesetzt werden Anhydride der Phthalsäure, Tetrahydro- und Hexahydrophthalsäure sowie 5-Methylhexahydrophthalsäureanhydrid.

Beispiele für geeignete Hydroxylalkylester alpha,beta-ungesättigter Carbonsäuren mit primären Hydroxylgruppen zur Herstellung hydroxyfunktioneller Poly(meth)acrylate-sind Hydroxyethylacrylat, Hydroxypropylacrylat, Hydroxybutylacrylat, Hydroxyamylacrylat, Hydroxyhexylacrylat, Hydroxyoctylacrylat und die entsprechenden Methacrylate. Als Beispiele für verwendbare Hydroxyalkylester mit einer sekundären Hydroxylgruppe seien 2-Hydroxypropylacrylat, 2-Hydroxybutylacrylat, 3-Hydroxybutylacrylat und die entsprechenden Methacrylate genannt.

Vorteilhafterweise kann die hydroxylfunktionalisierte Komponente zumindest teilweise ein Umsetzungsprodukt aus einem Mol Hydroxyethylacrylat und/oder Hydroxyethylmethacrylat und durchschnittlich zwei Mol epsilon-Caprolacton sein.

Als hydroxyfunktionalisierte Komponente kann zumindest teilweise auch ein Umsetzungsprodukt aus Acrylsäure und/oder Methacrylsäure mit dem Glycidylester einer Carbonsäure mit einem tertiären alpha-Kohlenstoffatom eingesetzt werden. Glycidylester stark verzweigter Monocarbonsäuren sind beispielsweise unter dem Handelsnamen "Cardura" erhältlich. Die Umsetzung der Acrylsäure oder Methacrylsäure mit dem Glycidylester einer Carbonsäure mit einem tertiären alpha-Kohlenstoff kann vor, während oder nach der Polymerisationsreaktion erfolgen.

Bei der Herstellung der (Meth)acrylcopolymeren können neben den vorstehend genannten Monomeren auch weitere ethylenisch ungesättigte Monomere verwendet werden. Die Auswahl der weiteren ethylenisch ungesättigten Monomeren ist nicht kritisch. Es muß nur darauf geachtet werden, daß der Einbau dieser Monomeren nicht zu unerwünschten Eigenschaften des Copolymerisats führt.

Als weitere ethylenisch ungesättigte Komponente geeignet sind insbesondere Alkylester der Acryl- und Methacrylsäure, wie z.B. Methyl(meth)acrylat, Ethyl(meth)acrylat, Propyl(meth)acrylat, Butyl(meth)acrylat, Isopropyl(meth)acrylat, Isobutyl(meth)acrylat, Pentyl(meth)acrylat, Hexyl(meth)acrylat, Cyclohexyl(meth)acrylat, 2-Ethylhexyl(meth)acrylat, Octyl(meth)acrylat, 3,5,5-Trimethylhexyl(meth)acrylat, Decyl(meth)acrylat, Dodecyl(meth)acrylat, Hexadecyl(meth)acrylat, Octadecyl(meth)acrylat und Octadecenyl(meth)acrylat. Ebenso möglich ist die Verwendung von silanmodifizierten Monomeren, wie z.B. gamma-Methacryloxypropyltrimethoxysilan oder gamma-Methacryloxpropyl-tris(2-methoxy-ethoxy)-silan.

Statt der vorstehend genannten Alkylester der Acryl- und Methacrylsäure oder zusammen mit diesen Alkylestern können zur Herstellung von (Meth)acrylcopolymerisaten weitere ethylenisch ungesättigte Monomere eingesetzt werden, wobei sich die Auswahl dieser Monomeren weitgehend nach den gewünschten Eigenschaften der Überzugsmittel in Bezug auf Härte, Elastizität, Verträglichkeit und Polarität richtet.

Beispiele für weitere, geeignete ethylenisch ungesättigte Monomere sind die Alkylester der Malein-, Fumar-, Tetrahydrophthal-, Croton-, Isocroton-, Vinylessig- und Itaconsäure, wie z.B. entsprechenden Methyl-, Ethyl, Propyl, Butyl, Isopropyl-, Isobutyl-, Pentyl-, Amyl-, Isoamyl-, Hexyl-, Cyclohexyl-, 2-Ethylhexyl-, Octyl-, 3,5,5-Trimethylhexyl-, Decyl-, Dodecyl-, Hexadecyl-, Octadecyl- und Octadecenylester.

Weiterhin können auch kleine Anteile Monomere mit mindestens zwei polymerisierbaren, olefinisch ungesättigten Doppelbindungen eingesetzt werden. Bevorzugt liegt der Anteil dieser Monomeren unter 5 Gew.-%, bezogen auf das Gesamtgewicht der Monomeren.

Beispiele für derartige Verbindungen sind Hexandioldiacrylat, Hexandioldimethacrylat, Ethylenglykoldiacrylat, Ethylenglykoldimethacrylat, Butandioldiacrylat, Butandioldimethacrylat, Hexamethylenbismethacrylamid, Trimethylolpropantriacrylat, Trimethylolpropantrimethacrylat und ähnliche Verbindungen.

Eine weitere geeignete Komponente sind monovinylaromatische Verbindungen. Vorzugsweise enthalten sie 8 bis 9 Kohlenstoffatome je Molekül. Beispiele für geeignete Verbindungen sind Styrol, Vinyltoluol, alpha-Methylstyrol, Chlorstyrol, o-, m- oder p-Methylstyrol, 2,5-Dimethylstyrol, p-Methoxystyrol, p-tert.-Butylstyrol, p-Dimethylaminostyrol, p-Acetamidostyrol und m-Vinylphenol. Bevorzugt werden Vinyltoluole sowie insbesondere Styrol eingesetzt.

Die Monomeren oder das eingesetzte Monomerengemisch können Initiatoren enthalten. Sofern Initiatoren nicht in der Monomerenmischung enthalten sind, können sie zur Monomerenmischung gegebenenfalls geringfügig zeitversetzt zugesetzt oder separat zudosiert werden. Anschließend kann noch über einen längeren Zeitraum, z.B. während mehrerer Stunden nachpolymerisiert werden. Es ist dann möglich, mit einem üblichen Lacklösemittel auf einen gewünschten Feststoffgehalt, beispielsweise in der Größenordnung von 30 bis 60 Gew.-%, beispielsweise 50 Gew.-% einzustellen.

Die Herstellung der Bindemittel erfolgt durch radikalische Copolymerisation. Die Monomermenge wird dabei so abgestimmt, daß die gewünschten Spezifikationen bezüglich Molmasse, OH-Gruppen-Verhältnis, OH-Zahl und Säurezahl erzielt werden. Dabei kann es sich als vorteilhaft erweisen, einen Teil der Monomeren zeitversetzt zueinander zuzudosieren.

Die Herstellung erfolgt beispielsweise als radikalische Lösungspolymerisation in Anwesenheit eines Radikalinitiators, wie sie dem Fachmann bekannt ist. Beispiele für Radikalinitiatoren sind Dialkylperoxide, wie Di-tert.-Butylperoxid, Di-Cumylperoxid; Diacylperoxid wie Di-benzoylperoxid, Dilauroylperoxid; Hydroperoxide, wie Cumolhydroperoxid, tert.-Butylhydroperoxid; Perester, wie tert.-Butyl-perbenzoat, tert.-Butylperpivalat, tert.-Butyl-per-3,5,5-trimethylhexanoat, tert.-Butyl-per-2-ethyl-hexanoat; Peroxiddicarbonate, wie Di-2-ethylhexyl-peroxydicarbonat, Dicyclohexylperoxydicarbonat; Perketale, wie 1,1-Bis-(tert.-Butylperoxy)-3,5,5-trimethyl-cyclohexan, 1,1-Bis-(tert.-Butylperoxy)-cyclohexan; Ketonperoxide, wie Cyclohexanonperoxid, Methylisobutylketonperoxid und Azoverbindungen, wie 2,2'-Azo-bis-(2,4-dimethyl-valeronitril), 2,2'-Azo-bis-(2-Methylbutyronitril), 1,1,1-Azo-bis-cyclohexancarbonitril, Azo-bis-isobutyronitril, C-C-spaltende Initiatoren wie z.B. Benzpinakol-Derivate.

Die Polymerisationsinitiatoren werden im allgemeinen beispielsweise in einer Menge von 0,1 bis 4 Gew.-%, bezogen auf die Monomeren-Einwaage, zugesetzt.

Zur Urethanisierung der carboxyfunktionalisierten (Meth)acrylcopolymeren müssen in einem weiteren Reaktionsschritt OH-Funktionen der carboxylfunktionalisierten (Meth)acrylcopolymeren mit Mono-, Di-, Tri- oder Polyisocyanaten umgesetzt werden. Die Menge der Di-, Tri-, oder Polyisocyanate ist abhängig von der OH-Zahl des (Meth)acrylcopolymeren und muß so gewählt werden, daß ein Gelieren vermieden wird. Beispielsweise werden Copolymere mit einer OH-Zahl von 30 bis 100 mg KOH/g mit Di-, Tri- oder Polyisocyanaten derart umgesetzt, daß eine OH-Zahl des urethanisierten Copolymeren von 15 bis 80 mg KOH/g resultiert. Hierbei kann so vorgegangen werden, daß das carboxyl- und OH-funktionelle (Meth)acrycopolymere in einem aprotischen Lösemittel gelöst vorgelegt wird und anschließend das Di-, Tri- oder Poly-isocyanat, gegebenenfalls in einem aprotischen Lösemittel wie z.B. Xylol oder Butylacetat gelöst, in einem Zeitraum von z.B. 30 Minuten bis 3 Stunden bei 5°C bis 80°C zudosiert wird. Das Ende der Reaktion ist erreicht, wenn die NCO-Zahl des Reaktionsgemisches kleiner 0,1 ist. Im Falle der Verwendung von Monoisocyanaten ist keine Einschränkung der Menge an Isocyanat notwendig, hier können gegebenenfalls alle OH-Funktionen des (Meth)acrylcopolymeren umgesetzt werden. Die Reaktionsbedingungen sind die gleichen wie bei Di-, Tri- oder Polyisocyanaten. Natürlich ist es ebenfalls möglich, die OH-funktionellen (Meth)acrylcopolymeren vor einer Einführung von Carboxylgruppen durch Umsetzung mit Säureanhydriden zu urethanisieren und erst anschließend die Säure anzulagern. Beispiele für Di-, Tri- und Polyisocyanate, die auch im Gemisch eingesetzt werden können, sind unter der Beschreibung der Komponente D₂) beschrieben.

Beispiele für Monoisocyanate sind z.B. Umsetzungsprodukte der für die Komponente D₂) beschriebenen Diisocyanate mit Monoalkoholen wie Methanol, Butanol, Hexanol oder Octanol, wobei 1 mol Diisocyanat mit 1 mol Alkohol umgesetzt wird. Weitere Beispiele für Monoisocyanate sind alpha,alpha-Dimethyl-m-isopropenylbenzylisocyanat oder Isocyanatoacrylat.

Bei den zur Herstellung der Komponente A) eingesetzten urethan- und carboxylgruppenhaltigen Polymeren handelt es sich um carboxylgruppenhaltige Copolymerisate und/oder carboxylgruppenhaltige Polyester. Die carboxylgruppenhaltigen Polyester können nach den üblichen Methoden (vgl. z.B. B. Vollmert, Grundriß der makromolekularen Chemie, E. Vollmert-Verlag Karlsruhe 1982, Band II, Seite 5 ff.) aufgebaut werden aus aliphatischen und/oder cycloaliphatischen Di-, Tri- oder höherwertigen Alkoholen, gegebenenfalls zusammen mit einwertigen Alkoholen und aus aliphatischen, aromatischen und/oder cycloaliphatischen Carbonsäuren sowie höherwertigen Polycarbonsäuren. Beispiele für geeignete Alkohole sind Ethylenglykol, 1,2-Propandiol, 1,3-Propandiol, 2,2-Diemthyl-1,3-propandiol, 1,2-Butandiol, 1,3-Butandiol, 1,4-Butandiol, 1,5-Pentandiol, 3-Methyl-1,5-pentandiol, 1,6-Hexandiol, 2-Ethyl-1,6-hexandiol, 2,2,4-Trimethyl-1,6-hexandiol, 1,4-Dimethylolcyclohexan, Glycerin, Trimethylolethan, Trimethylolpropan, Pentaerythrit, Veretherungsprodukte von Diolen und Polyolen, z.B. Di- und Triethylenglykol, Polyethylenglykol, Neopentylglykolester von Hydroxypivalinsäure.

Beispiele für geeignete Carbonsäuren sind Adipin-, Azelain-, 1,3- und 1,4-Cyclohexandicarbonsäure, Tetrahydrophthal-, Hexahydrophthal-, Endomethyltetrahydrophthalsäure, Isophthalsäure, o-Phthalsäure, Terephthalsäure bzw. deren Anhydride sowie deren veresterungsfähige Derivate.

Die errechneten Molgewichte der Polyester liegen beispielsweise bei 500 bis 4000 g/mol, bevorzugt zwischen 500 und 2000 g/mol.

Die zur Herstellung der Komponente A) verwendbaren carboxyfunktionellen (Meth)acrylcopolymerisate und Polyester werden mit einem Lacton "kettenverlängert". Die Lactone (zyklische Ester) lagern sich an Carboxylgruppen an, wobei der Ring geöffnet wird und eine neue endständige Carboxylgruppe entsteht. Da bei Anwesenheit von OH- und COOH-Gruppen die OH-Gruppen wesentlich schneller mit Lactonen reagieren, sind zur Herstellung der Komponente A) carboxyfunktionelle (Meth)acrylcopolymerisate und carboxyfunktionelle Polyester bevorzugt, die frei von OH-Gruppen sind. Wird zunächst von OH-Gruppen enthaltenden Copolymerisaten bzw. Polyestern ausgegangen, so werden deren OH-Gruppen bevorzugt ganz oder weitgehend mit Anhydriden zu Carbonsäuren umgesetzt. Ein Beispiel für ein besonders bevorzugtes Lacton ist das epsilon-Caprolacton.

Beispiele für andere Lactone sind gamma-Butyrolacton und Lactone, wie beta-Propiolacton, delta-Valerolacton, delta-Butyrolacton, zeta-Enantholacton, eta-Caprylolacton. Derartige Lactone können substituiert sein; Beispiele hierfür sind 6-Methyl-epsilon-caprolacton, 3-Methylepsilon-caprolacton, 5-Methyl-epsilon-caprolacton, 5-Phenol-epsiloncaprolacton, 4-Methyl-delta-valerolacton, 3,5-Dimethyl-epsilon-caprolacton, und Mischungen davon.

Die Umsetzung mit dem Lacton kann beispielsweise unmittelbar im Anschluß an die Harzsynthese, d.h. an die Synthese des Poly(meth)acrylcopolymerisats und/oder des Polyesters erfolgen. Die Reaktion erfolgt beispielsweise bei erhöhter Temperatur, beispielsweise bei Temperaturen bis zu 100°C. Die Reaktion kann beispielsweise unter Rühren beispielsweise bis zu 10 Stunden durchgeführt werden.

Ebenso wie die bereits beschriebenen carboxylfunktionalisierten (Meth)acrylcopolymeren werden die sauren Polyester urethanisiert. Die Reaktionsbedingungen sind die gleichen wie bei den (Meth)acrylcopolymeren. Möglich ist die Einführung der Urethangruppen durch 1. Umsetzung der carboxyl- und OH-funktionellen Polyester, 2. Umsetzung der lactonmodifizierten carboxylfunktionellen und OH-funktionellen Polyester mit Mono-, Di- oder Tri- oder Polyisocyanaten. Bevorzugt ist die Umsetzung von carboxyl- und OH-funktionellen Polyestern vor der Lactonisierung mit Polyisocyanaten. Hierbei ist es möglich, einen großen Teil oder die Gesamtmenge der OH-Gruppen zu urethanisieren, so daß diese OH-Gruppen im Falle der Lactonumsetzung nicht mehr in Konkurrenzreaktionen zu Carboxylgruppen eingehen können.

Ebenfalls möglich ist es, die Urethangruppen bei der Synthese der Polyester selbst einzuführen. Dies geschieht, indem Di- oder Tricarbonsäuren ganz oder teilweise gegen Di- oder Triisocyanate ausgetauscht werden.

Die oben genannten Wege 1) und 2) sind bevorzugt, besonders bevorzugt ist Weg 1). Beispiele für einsetzbare Mono-, Di-, Tri- oder Polyisocyanate werden bei der Beschreibung der Komponente D₂) genannt.

Die erfindungsgemäße Bindemittelzusammensetzung, bzw. die erfindungsgemäßen Überzugsmittel enthalten als Komponente B) eine oder mehrere epoxidfunktionalisierte Verbindungen mit mindestens zwei Epoxidfunktionen im Molekül, mit einem Zahlenmittel des Molgewichtes (Mn) von 200 bis 10000 g/mol.

Beispiele hierfür sind übliche Di- oder Polyepoxide, z.B. Polyglycidylether auf Basis von Diethylenglykol, Dipropylenglykol, Polypropylenglykol mit einem Zahlenmittel des Molgewichtes (Mn) bis 2000, Triglycidylether von Glycerin und/oder Di- oder Polyphenolen wie Bisphenol A.

Weitere Beispiele für Di- oder Polyepoxide sind solche auf der Basis von Di- oder Polyglycidylestern. Beispiele hierfür sind Umsetzungsprodukte aus 1-Hydroxy-2,3-epoxypropan mit Phthal- oder Terephthalsäure zu Phthal- oder Terephthalsäure-bis(2,3-epoxypropylester) oder einem Diglycidylether von Bisphenol A mit Trimellithsäureanhydrid zu Polyestern mit einem Zahlenmittel des Molekulargewichtes (Mn) von 500 bis 2000.

Ebenfalls verwendbare Beispiele sind Glycidyl-funktionalisierte (Meth)acrylcopolymere. Beispiele hierfür sind Copolymere von Glycidyl(meth)acrylat oder 2,3-Epoxycyclopentylacrylat. Als Comonomere können Ester der (Meth)acrylsäure, wie z.B. Methyl-, Ethyl-, Butyl-, Isobutyl-, Ethylhexyl-, Cyclohexyl- und/oder Lauryl(meth)acrylat gewählt werden, hydroxyfunktionalisierte Ester der (Meth)acrylsäure wie z.B. Hydroxyethyl- und/oder Hydroxypropylester, weiterhin auch Styrol, Vinyltoluol und/oder alpha-Methylstyrol sowie alle alpha,beta-ungesättigten Monomere, wie sie bereits vorstehend für die Komponente A) beschrieben wurden. Das Zahlenmittel des Molgewichtes (Mn) kann beispielsweise zwischen 1000 und 10000 liegen, bevorzugt bei 2000 bis 5000. Weitere copolymerisierbare Glycidylmonomere sind z.B. (Meth)allylglycidylether oder 3,4-Epoxy-1-vinylcyclohexan. Die Herstellung der Copolymere erfolgt über radikalische Lösungspolymerisation, sie ist dem Fachmann bekannt und bedarf keiner weiteren Erläuterung.

Es ist auch möglich, die Bindemittelkomponenten A und B zumindest teilweise in einem weiteren Reaktionsschritt zu präkondensieren. Dies kann z.B. dadurch erfolgen, daß man die Komponenten A und B gemeinsam erhitzt. Den gewünschten Kondensationsgrad kann man beispielsweise an der Verringerung der Säurezahl ermitteln. Beispielsweise ist es möglich, unter Rühren, auf Temperaturen von beispielsweise 80 bis 120°C zu erhitzen und so lange weiterzurühren, bis die Säurezahl der Mischung um beispielsweise 2 bis 5 mg KOH/g Festharz gefallen ist. Selbstverständlich ist es auch möglich, die Säurezahl weiter zu reduzieren, dabei sollte jedoch darauf geachtet werden, daß die Viskosität der Mischung nicht bis zum Gelieren ansteigt. Durch die Präkondensation der Komponenten A) und B) kann die Lagerstabilität der Zusammensetzungen weiter erhöht werden. Die Präkondensation zwischen den Komponenten A) und C) ist ebenfalls möglich, die Bedingungen sind die gleichen wie bei der Kondensation von A) und B). Ebenfalls möglich ist es, das Bindemittel B) im Schoße des Bindemittels C) beziehungsweise umgekehrt zu synthetisieren.

Hierzu ist es beispielsweise möglich einen Teil oder das gesamte Polyol der Komponente C) gegebenenfalls mit einem oder mehreren organischen Lösemitteln vorzulegen und darin die zur Herstellung der epoxidfunktionellen Komponente B) benötigten Monomeren oder einen Teil davon, umzusetzen. Beispielsweise können die Polyole C), gegebenenfalls mit Lösemittel, vorgelegt und erwärmt werden, beispielsweise auf Temperaturen in der Größenordnung von 140°C. Die zur Herstellung der epoxidfunktionellen Komponente B) benötigten Monomeren können, gegebenenfalls zusammen mit Initiatoren, zudosiert werden, beispielsweise während eines Zeitraum von bis zu 5 Stunden. Bei dieser Verfahrensweise wird als Polyol-Komponente C), wie sie nachstehend noch genauer definiert wird, bevorzugt ein Polyesterpolyol verwendet, insbesondere ein solches mit einem Zahlenmittel des Molekulargewichts Mn von 500 bis 2000, bevorzugt mit einer Säurezahl unter 3 mg KOH/g und bevorzugt mit einer OH-Zahl von 15 bis 200 mg KOH/g. Ein derartiges Präkondensat (Schoßpolymerisat) aus B) und C) kann gegenüber einer Mischung aus B) und C) Vorteile besitzen, wie beispielsweise eine bessere Verträglichkeit und eine homogenere Vermischung.

Die erfindungsgemäße Bindemittelzusammensetzung bzw. die erfindungsgemäßen Überzugsmittel können ein oder mehrere Polyole mit mindestens zwei Hydroxylfunktionen im Molekül als Komponente C) enthalten. Diese Polyole können beispielsweise ausgewählt werden aus
a) Polyolen aus der Gruppe von geraden oder verzweigten Alkan-di- und Polyolen mit 2 bis 12 Kohlenstoffatomen, oder
b) hydroxylgruppenhaltigen Poly(meth)acrylaten oder Poly(meth)acrylamiden auf der Basis von (Meth)acrylsäurehydroxyalkylestern mit 2 bis 12 Kohlenstoffatomen im Alkylteil oder (Meth)acrylsäure-hydroxyalkylamiden mit 2 bis 12 Kohlenstoffatomen im Alkylteil, gegebenenfalls copolymerisiert mit alpha,beta-ungesättigten Monomeren, mit einem Zahlenmittel des Molekulargewichts Mn von 1000 bis 10000, oder
c) hydroxylgruppenhaltigen Poly(meth)acrylaten auf der Basis von (Meth)acrylsäurehydroxyalkylestern mit 2 bis 12 Kohlenstoffatomen im Alkylteil und gegebenenfalls copolymerisierbaren alpha,beta-ungesättigten Monomeren, die mit cyclischen Estern von Hydroxycarbonsäuren mit 4 bis 6 Kohlenstoffatomen modifiziert sind, mit einem Zahlenmittel des Molekulargewichts Mn von 1000 bis 10000, oder
d) Polyester-Polyolen oder Polyether-Polyolen jeweils mit einem Zahlenmittel des Molekulargewichts Mn von 500 bis 2000.

Beispiele für Alkan-di- und -polyole der Gruppe a) sind solche mit geraden und verzweigten Ketten mit 2 bis 12 Kohlenstoffatomen. Sie enthalten mindestens zwei Hydroxyfunktionen, vorzugsweise jedoch mindestens drei.

Beispiele hierfür sind Propandiol, Butandiol, Hexandiol, Glycerin, Trimethylpropan und Pentaerythrit.

Beispiele für hydroxylgruppenhaltige Poly(meth)acrylate b) auf der Basis von (Meth)acrylsäurehydroxylalkylestern mit 2 bis 12 Kohlenstoffatomen im Alkylteil sind Hydroxylalkylester der Acrylsäure oder Methacrylsäure mit Alkoholen mit mindestens zwei Hydroxylgruppen, wie 1,4-Butandiol-mono(meth)acrylat 1,6-Hexandiol-mono(meth)acrylat oder 1,2,3-Propantriol-mono(meth)acrylat. Beispiele für hydroxylgruppenhaltige Poly(meth)acrylamide b) auf der Basis von (Meth)acrylsäurehydroxyalkylamiden sind Amide der Acrylsäure oder Methacrylsäure mit Hydroxyalkylaminen oder Di(hydroxyalkyl)aminen mit jeweils 2 bis 12 Kohlenstoffatomen im Alkylteil, die eine oder mehrere Hydroxylgruppen aufweisen können, wie Acrylsäurehydroxyethylamid.

Die hydroxylgruppenhaltigen Poly(meth)acrylate der Komponente b) können Homo- oder Copolymerisate sein. Sie weisen Zahlenmittel des Molekulargewichts (Mn) von 1000 bis 10000, bevorzugt von 3000 bis 6000 g/mol auf. Copolymerisierbare Monomere zur Herstellung der Copolymerisate sind alpha,β-ungesättigte Monomere, radikalisch polymerisierbare Monomere aus der Gruppe der Ester von alpha,beta-ungesättigten Carbonsäuren, wie Acrylsäure oder Methacrylsäure, wobei Beispiele für die Alkoholkomponente Methyl-, Ethyl-, Propyl-Alkohol und deren Isomere und höhere Homologe sind. Weitere Beispiele sind Diester der Malein- oder Fumarsäure, wobei die Alkoholkomponente die gleiche wie vorstehend erwähnt ist. Weitere Beispiele sind vinylaromatische Verbindungen, wie Styrol, alpha-Methylstyrol und Vinyltoluol. Weitere Beispiele sind Vinylester kurzkettiger Carbonsäure, wie Vinylacetat, Vinylpropionat und Vinylbutyrat.

Die hydroxylgruppenhaltigen Poly(meth)acrylate der vorstehend definierten Komponente c) können modifizierte Poly(meth)acrylat-homo- und -copolymere sein, wie sie unter b) beschrieben werden, deren Hydroxylgruppen ganz oder partiell mit cyclischen Estern, wie z.B. von Hydroxycarbonsäure mit 4 bis 6 Kohlenstoffatomen, wie gamma-Butyrolacton oder epsilon-Caprolacton umgesetzt sein können. Die erhaltenen modifizierten Poly(meth)acrylate der Komponente c) weisen ein Zahlenmittel des Molekulargewichts Mn von 1000 bis 10000 auf.

Beispiele für die Polyesterpolyole und Polyetherpolyole der Komponente d) sind solche mit einem Zahlenmittel des Molekulargewichts Mn von 500 bis 2000 g/mol. Spezielle Beispiele sind Umsetzungsprodukte von Di- bzw. Tricarbonsäuren, wie Adipinsäure oder Trimellithsäure, mit Polyolen, wobei die Polyole im Überschuß vorliegen. Weitere Beispiele sind Umsetzungsprodukte von Di- oder Triolen, wie Propandiol, Butandiol oder Glycerin, mit Ethylenoxid oder Propylenoxid.

Die erfindungsgemäße Bindemittelzusammensetzung bzw. die erfindungsgemäßen Überzugsmittel können als Komponente D₁) gegebenenfalls ein oder mehrere Melaminharze als Vernetzer enthalten. Beispiele hierfür sind in Wasser unlösliche butanol- oder isobutanolveretherte Melamine wie z.B. die Handelsprodukte Setamin ^{R} US 138 oder Haprenal ^{R} MF 610; mischveretherte Melamine, die sowohl butanol- als auch methanolverethert sind, wie z.B. Cymel ^{R} 254, sowie Hexamethyloxymethylmel-amin (HMM-Melamine) wie z.B. Cymel ^{R} 301 oder Cymel ^{R} 303, wobei letzteren zur Vernetzung gegebenenfalls ein Säurekatalysator wie z.B. p-Toluolsulfonsäure zugesetzt werden kann. Weitere Beispiele für Melaminharzvernetzer sind übliche hydrophile und damit wasserlösliche bzw. -verträgliche Melaminharze, wie z.B. methylveretherte Melamine wie z.B. Cymel ^{R} 325, Cymel ^{R} 327, Cymel ^{R} 350 und Cymel ^{R} 370, Maprenal ^{R} MF 927.

Ebenfalls möglich ist die Verwerdung des Vernetzers Tris(alkoxycarbonylamino)triazin. Beispiele für Alkoxygruppen sind Methoxy- und Butoxygruppen.

Die erfindungsgemäßen Überzugsmittel können als Vernetzer (Komponente D₂) ein oder mehrere freie oder verkappte Polyisocyanate enthalten. Beispiele für einsetzbare Polyisocyanate sind cycloaliphatische, aliphatische oder aromatische Polyisocyanate wie Tetramethylendiisocyanat, Hexamethylendiisocyanat, 2,2,4-Trimethylendiisocyanat, 1,12-Dodecandiisocyanat, Cyclohexan-1,3- und 1,4-diisocyanat, 1-Isocyanato-3,3,5-trimethyl-5-isocyanato-methylcyclohexan (=Isophorondiisocyanat IPDI), Perhydro-2,4'- und/oder -4,4'-diphenylmethandiisocyanat, 1,3- und 1,4-Phenylendiisocyanat, 2,4- und 2,6-Toluylendiisocyanat, Diphenylmethan-2,4'- und/oder -4,4'-diisocyanat, 3,2'- und/oder 3,4-Diisocyanato-4-methyl-diphenylmethan, Naphthylen-1,5-diisocyanat, Triphenylmethan-4,4',4"-triisocyanat, Tetramethylxylylendiisocyanat oder Gemische dieser Verbindungen.

Neben diesen einfachen Isocyanaten sind auch solche geeignet, die Heteroatome in dem die Isocyanatgruppen verknüpfenden Rest enthalten. Beispiele hierfür sind Carbodiimidgruppen, Allophanatgruppen, Isocyanuratgruppen, Urethangruppen, acylierte Harnstoffgruppen und Biuretgruppen aufweisende Polyisocyanate.

Besonders gut für die Erfindung geeignet sind die bekannten Polyisocyanate, die hauptsächlich bei der Herstellung von Lacken eingesetzt werden. z.B. Biuret-, Isocyanurat- oder Urethangruppen aufweisende Modifizierungsprodukte der oben genannten einfachen Polyisocyanate, insbesondere Tris-(6-Isocyanatohexyl)-biuret oder niedermolekulare, Urethangruppen aufweisende Polyisocyanate, wie sie durch Umsetzung von im Überschuß eingesetzten IPDI mit einfachen mehrwertigen Alkoholen des Molekulargewichtsbereiches 62 - 300, insbesondere mit Trimethylolpropan erhalten werden können. Selbstverständlich können auch beliebige Gemische der genannten Polyisocyanate zur Herstellung der erfindungsgemäßen Produkte eingesetzt werden.

Geeignete Polyisocyanate sind ferner die bekannten, endständigen Isocyanatgruppen aufweisenden Prepolymere, wie sie insbesondere durch Umsetzung der oben genannten einfachen Polyisocyanate, vor allem Diisocyanate, mit unterschüssigen Mengen an organischen Verbindungen mit mindestens zwei gegenüber Isocyanatgruppen reaktionsfähigen Gruppen zugänglich sind. Als solche kommen bevorzugt insgesamt mindestens zwei Aminogruppen und/oder Hydroxylgruppen aufweisende Verbindungen mit einem Zahlenmittel der Molmasse von 300 bis 10000, vorzugsweise 400 bis 6000, zur Anwendung.

In diesen bekannten Prepolymeren entspricht das Verhältnis von Isocyanatgruppen zu gegenüber NCO reaktiven Wasserstoffatomen 1,05 bis 10:1, vorzugsweise 1,1 bis 3:1, wobei die Wasserstoffatome vorzugsweise aus Hydroxylgruppen stammen.

Die Art und Mengenverhältnisse der bei der Herstellung von NCO-Prepolymeren eingesetzten Ausgangsmaterialien werden im übrigen vorzugsweise so gewählt, daß die NCO-Prepolymeren a) eine mittlere NCO-Funktionalität von 2 bis 4, vorzugsweise von 2 bis 3 und b) ein Zahlenmittel der Molmasse von 500 bis 10000, vorzugsweise von 800 - 4000 aufweisen.

Die Polyisocyanate können als freie Polyisocyanate eingesetzt werden. In diesem Falle sind sie nicht verkappt. Es handelt sich dann um sogenannte Zweikomponentensysteme (2K-Systeme), bei denen die Polyisocyanate unmittelbar vor der Anwendung zugesetzt werden. Wenn die Isocyanatgruppierungen der Polyisocyanate vollständig verkappt sind, können die verkappten Polyisocyanate dem Überzugsmittel direkt zugesetzt werden. Es handelt sich dann um sogenannte Einkomponentensysteme (1K-Systeme).

Als Verkappungsmittel können übliche Verkappungsmittel verwendet werden, wie sie beispielsweise auf dem Lacksektor eingesetzt werden. Beispiele für verwendbare Verkappungsmittel sind Malonsäuredimethylester, Malonsäurediethylester, Acetessigsäureethylester, epsilon-Caprolactam, Acetanilid, Acetylaceton, Acetonoxim, substituierte Pyrazole, wie Dimethylpyrazol, Propandiol-1,2 und/oder Butanonoxim, wobei das zuletzt genannte Verkappungsmittel bevorzugt ist.

Die Verkappung der Polyisocyanate kann z.B. durch Erwärmen ein oder mehrerer Polyisocyanate mit dem Verkappungsmittel erfolgen. Beispielsweise können ein oder mehrere Polyisocyanate vorgelegt und unter Rühren erhitzt werden, z.B. auf etwa 80°C, und das Verkappungsmittel (beispielsweise während etwa 10 min.) zudosiert werden. Es wird solange gerührt, bis die NCO-Zahl kleiner als 0,1 % beträgt. Es ist auch möglich, ein oder mehrere Polyisocyanate mit einem Gemisch aus zwei oder mehreren Verkappungsmitteln zu verkappen.

Der Vorteil der Verwendung von zwei oder mehreren unterschiedlichen Polyisocyanaten und/oder zwei oder mehreren unterschiedlichen Verkappungsmitteln liegt darin, daß hiermit die Vernetzung über einen weiten Temperaturbereich erfolgen kann.

Werden unverkappte, freie Polyisocyanate in wäßrigen Systemen eingesetzt, so kann es vorteilhaft sein, die Polyisocyanate mit hydrophilen oder hydrophoben Gruppen auszustatten. Durch den Einsatz hydrophiler Polyisocyanate können diese leichter im Wasser dispergiert werden.

Durch die Einführung hydrophober Gruppen erfolgt eine raschere Diffusion der hydrophobisierten Polyisocyanate in die Harzteilchen in wäßrigen Systemen. Hydrophilisierte Polyisocyanate sind dem Fachmann geläufig, beispielsweise aus EP-A-O 019 844, EP-A-0 061 628, EP-A-0 310 345 und EP-A-0 540 985. Hydrophobisierte Polyisocyanate werden beispielsweise in der nichtveröffentlichten deutschen Patentanmeldung P 43 17 791 der gleichen Anmelderin beschrieben.

Die erfindungsemäße Bindemittelzusammensetzung und damit die erfindungsgemäßen Überzugsmittelzusammensetzungen können einen oder mehrere Katalysatoren (Komponente E) enthalten. Es handelt sich insbesondere um in organischen Lösemitteln oder in Wasser lösliche oder mit organischen Materialien mischbare Katalysatoren. Beispiele für geeignete in organischen Lösemitteln oder mit organischen Materialien mischbare Katalysatoren sind Phosphoniumsalze, wie beispielsweise Ethyltriphenylphosphoniumacetat, -phosphat, -chlorid, -bromid, -jodid, Butyltriphenylphosphoniumacetat, -phosphat, -chlorid, -bromid, - jodid, Benzyltriphenylphosphoniumacetat, -phosphat, -chlorid, -bromid, -jodid und die quaternären Ammoniumsalze, wie beispielsweise Alkylbenzyldimethylammoniumchlorid, Benzyltrimethylammoniumchlorid, Methyltrioctylammoniumchlorid, Tetraethylammoniumbromid, N-Dodecylpyridiniumchlorid und Tetraethylammoniumiodid. Die bevorzugten in organischen Lösemitteln löslichen oder mit organischen Materialien mischbaren Katalysatoren sind Ethyltriphenylphosphonium-Acetat, -phosphat, -chlorid, -bromid, Butyltriphenylphosphoniumacetat, -phosphat, -chlorid, -bromid, Benzyltriphenylphosphoniumacetat, -phosphat, -chlorid, -bromid, und Methyltrioctylammoniumchlorid, Ethyltriphenylphosphoniumphosphat kann beispielsweise aus Ethyltriphenylphosphoniumacetat durch Reaktion mit Phosphorsäure erhalten werden. Ein weiteres Katalysatorbeispiel ist p-Toluolsulfonsäure. Es ist auch möglich, das glycidylfunktionalisierte Harz mit p-Toluolsulfonsäure umzusetzen, beispielsweise bei erhöhter Temperatur, bis zu beispielsweise 80°C. Hierbei wird die p-Toluolsulfonsäure unter Oxiran-Öffnung angelagert. Beim Einbrennen des fertigen Lackes wird die p-Toluolsulfonsäure zurückgespalten und kann die Vernetzung COOH-Epoxid katalysieren.

Weitere Beispiele sind Dinonylnaphthalindisulfonsäure, Dinonylnaphthalinmonosulfonsäure und Dodecylbenzolsulfonsäure. Die Säurekatalysatoren können teilweise, ganz oder überneutralisiert werden. Mögliche Neutralisationsmittel sind tertiäre Amine, wie z.B. Triethylamin, Dimethylethanolamin oder Dimethyloxazolidin.

Der in organischen Lösemitteln und/oder Wasser lösliche oder mit organischen Materialien mischbare Katalysator kann in einer Menge von etwa 0 bis etwa 10 Gew.-%, vorzugsweise von 0,3 bis 2,0 Gew.-%, bezogen auf die Summe der Gewichte der Komponenten A) bis D₂) enthalten sein.

Ebenfalls ist es möglich, einen Aminkatalysator mit dem COOH-funktionalisierten (Meth)acrylcopolymerharzgemisch zu verknüpfen. Dies geschieht zweckmäßigerweise durch Copolymerisation von tert.-Amino(meth)acrylmonomeren bei der Synthese des COOH-funktionalisierten (Meth)acrylcopolymerharzes.

Beispiele für solche Monomere sind Dimethylaminoethyl(meth)acrylat, Diethylaminopropyl(meth)acrylat und Dimethylaminopropyl(meth)acrylat. Der mengenmäßige Anteil dieser (Meth)acrylate liegt bei 0,5 bis 10 Gew.-%, bevorzugt 1 bis 5 Gew.-%, bezogen auf den Gesamtfeststoffgehalt des COOH-funktionalisierten (Meth)acrylcopolymerharzes.

Bei der Bereitung der erfindungsgemäßen Bindemittelzusammensetzung bzw. Überzugsmittelzusammensetzung werden die Mengenverhältnisse bevorzugt so gewählt, daß zwischen dem carboxylgruppenhaltigen Harz der Komponente A) und der Epoxidkomponente B) ein molares Verhältnis der reaktiven Gruppen von 1:3 bis 3:1 vorliegt und daß bevorzugt zwischen der Summe der Gewichte der Komponenten A) bis C) und dem Gewicht des Melaminharzes der Komponente D₁) ein Gewichtsverhältnis von 65:35 Gew.-% bis 98:2 Gew.-% bzw. dem Gewicht der verkappten Isocyanate D₂) ein Gewichtsverhältnis von 60:40 bis 95:5 Gew.-% herrscht. Die erfindungsgemäßen Bindemittelzusammensetzungen können zur Herstellung von Überzugsmitteln eingesetzt werden. Sie können Lösemittel enthalten, wie sie beispielsweise für die Herstellung von Überzugsmitteln, beispielsweise Lacken üblich sind. Es kann sich auch um Lösemittel handeln, wie sie bei der Herstellung der Einzelkomponenten verwendet werden.

Beispiele für derartige Lösemittel sind organische Lösemittel, wie aliphatische und aromatische Kohlenwasserstoffe, beispielsweise Toluol, Xylol, Gemische aliphatischer und/oder aromatischer Kohlenwasserstoffe, Ester, Ether und Alkohole. Es sind dies lackübliche Lösemittel. Zur Herstellung der Überzugsmittel aus den erfindungsgemäßen Bindemitteln können auch wäßrige Lösungen bereitet werden. Hierzu können gegebenenfalls geeignete Emulgatoren verwendet werden, wie sie auf dem Lacksektor üblich sind.

Die erfindungsgemäßen Bindemittelzusammensetzungen, sowie die erfindungsgemäßen Überzugsmittel können auch in wäßriger Form vorliegen, wobei sie frei von organischen Lösemitteln sind oder nur einen geringeren Anteil an organischen Lösemitteln aufweisen. Zur Herstellung wäßriger Zusammensetzungen ist es beispielsweise möglich, die carboxylhaltige Komponente A) weitgehend von organischen Lösemitteln zu befreien, z.B. durch Destillation, anschließend einen Teil der Carboxylgruppen zu neutralisieren, z.B. mit Basen wie Triethylamin oder Dimethylethanolamin und dann in Wasser, das gegebenenfalls erwärmt ist, zu emulgieren. In dieses Emulgatorharz können dann gegebenenfalls die anderen Harze einemulgiert werden. Dies geschieht z.B. dadurch, daß das Emulgatorharz auf 60 - 80°C erwärmt und die ebenfalls auf 60 - 80°C erwärmten Hydroxy- und/oder epoxydfunktionellen Harze in 5 - 120 Minuten unter Rühren zugefügt werden.

Ebenfalls möglich ist es auch, das weitgehend von Lösemitteln befreite COOH-funktionalisierte Harz mit dem weitgehend vom Lösemittel befreite Epoxidharz zu mischen und in einem Wasser/Emulgator-Gemisch mittels einer Rotor/Stator-Anlage zu emulgieren. Ebenso ist es möglich, die Komponenten getrennt zu emulgieren und die Emulsion zu mischen.

Zur Herstellung der erfindungsgemäßen Überzugsmittel können Pigmente, Füllstoffe und/oder lackübliche Hilfs- und Zusatzstoffe zugesetzt werden. Es handelt sich dabei um lackübliche Additive, wie sie auf dem Lacksektor geläufig sind.

Die Mengen liegen im üblichen, dem Fachmann geläufigen Bereich.

Beispiele für solche Additive sind Pigmente, beispielsweise farbgebende Pigmente wie Titandioxid oder Ruß und Effektpigmente wie Metallschuppenpigmente und/oder Perlglanzpigmente. Die erfindungsgemäß bereitgestellten Bindemittelzusammensetzungen eignen sich auch für Überzugsmittel, die derartige Effektpigmente enthalten. Bevorzugt enthalten sie Effektpigmente zusammen mit farbgebenden Pigmenten oder farbgebende Pigmente zusammen mit Füllstoffen. Weitere Beispiele für Additive sind lackübliche Füllstoffe, wie z.B. Talkum und Silikate, sowie Hilfs- und Zusatzstoffe wie Weichmacher, Lichtschutzmittel, Stabilisatoren und Verlaufsmittel, wie Silikonöle. Diese werden ebenfalls in üblichen, dem Fachmann geläufigen Mengen eingesetzt.

Die aus den erfindungsgemäßen Bindemitteln hergestellten Überzugsmittel sind für Überzüge geeignet, die auf einer Vielzahl von Substraten haften, wie beispielsweise Holz, Textilien, Kunststoff, Glas, Keramik und insbesondere Metall.

Das erfindungsgemäße Überzugsmittel kann nach bekannten Verfahren, wie z.B. Spritzen, Tauchen, Rollen oder Rakeln appliziert werden. Dabei wird auf das gegebenenfalls schon mit weiteren Lackschichten versehene Substrat der Decklacküberzug aufgetragen. Nach einer Abdunstphase wird das applizierte Überzugsmittel durch Erwärmen vernetzt. Die Einbrenntemperaturen liegen bei 20 bis 180°C, bevorzugt bei 60 bis 150°C. Die Schichtdicke des eingebrannten Films beträgt ca. 15 bis 60 µm. Dabei entsteht ein vernetzter harter, glänzender sowie säurebeständiger Lacküberzug.

Eine bevorzugte Ausführungsform ist die Applikation des erfindungsgemäßen Überzugsmittels als Klarlacküberzug auf einen Basislack, bevorzugt einen wäßrigen Basislack. Dabei kann naß-in-naß gearbeitet werden, oder der Basislack wird vorher durch Erwärmen getrocknet. Dabei entsteht eine besonders gute Haftung der beiden Schichten.

Mit den erfindungsgemäß pigmentfrei als Klarlacke formulierten Überzugsmitteln können beispielsweise Basislacke überlackiert werden, die übliche Decklackpigmente enthalten können; bevorzugt enthalten sie Effektpigmente, wie z.B. Metallic-Pigmente. Als Bindemittelbasis des Basislacks werden bevorzugt Polyester, Polyurethan- oder (Meth)acrylcopolymerharze eingesetzt. Diese Bindemittel können gegebenenfalls über Vernetzer, z.B. Melamin- oder Isocyanatderivate, vernetzt werden.

Im Folgenden werden einige Beispiele für weitere Basislacke aufgeführt, die bevorzugt mit erfindungsgemäß bereiteten pigmentfreien Klar- oder pigmenthaltigen Decklacken beschichtet werden können.

Wasserbasislacke auf der Basis von 5 bis 95 Gew.-% eines wäßrigen epoxidfunktionalisierten Emulsionspolymerisats und 95 bis 5 Gew.-% einer anionischen Polyurethandispersion mit einer Säurezahl von 5 bis 10 mg KOH/g. Als Anreibeharze für in solchen Wasserbasislacken verwendete Pigmente und Additive eignen sich besonders (Meth)acrylcopolymerharze (beispielsweise in einer Menge bis zu 20 Gew.-%). Beispiele für solche Wasserbasislacke sind in der DE-A-36 28 124 beschrieben.

Basislacke auf der Basis von Polyestern mit einer Glasübergangstemperatur von > 30°C, Melaminharzen (z.B. partiell butylierten Melaminharzen), Polyharnstoffplastifizierern (beispielsweise auf der Basis eines Addukts aus Butylurethan und Formaldehyd) und einem Copolymer aus Polyethylen (85 Gew.-%) - Vinylacetat (15 Gew.-%) als Wachsdispersion. Solche Basislacke können übliche Additive, wie Celluloseacetobutyrat (beispielsweise mit unterschiedlichen Molekular-Gewichtsbereichen) enthalten. Beispiele für solche Basislacke sind in der EP-A-187 379 beschrieben.

Ein Beispiel für Basislacke auf Lösemittelbasis, die besonders für Reparaturzwecke geeignet sind, enthält physikalisch trocknende Bindemittel auf der Basis von thermoplastischem Polyester- und/oder (Meth)acrylharz im Gemisch mit Celluloseethern bzw. Celluloseestern und/oder Polyvinylacetaten. Ferner enthalten sind selbsthärtende (Meth)acrylharzbindemittel, die Farbpigmente enthalten und mit Isocyanat reagierende Wasserstoffatome aufweisen sowie zusätzlich Gemische von in Lösemitteln gelösten Celluloseestern und/oder Cellulosehalbestern. Solche Lacke sind z.B. in der DE-OS 29 24 632 beschrieben.

Sämtliche der vorstehenden Basislackformulierungen können übliche Lackadditive enthalten, sowie übliche Füllstoffe und farbgebende Pigmente sowie auch Metallpigmente, wie Aluminium- bzw. Edelstahlbronzen und andere Effektpigmente.

Beispiele für Basislacke, die mit Klarlacken auf der Basis erfindungsgemäßer Überzugsmittel beschichtet werden können, sind auch Pulverlakke, wie sie beispielsweise in "Products Finishing", April 1976, Seiten 54 bis 56 beschrieben sind. Es ist auch möglich, den Lack zu erwärmen und heiß zu applizieren, beispielsweise auf 60 bis 100°C. Hierdurch kann der Lack mit hohem Verarbeitungsfestkörper appliziert werden, da durch das Erwärmen die Viskosität reduziert wird.

Es ist auch möglich, den Lack mit überkritischem Kohlendioxid als Lacklösemittel zu versetzen und nach dem sogenannten Unicarb-Verfahren, wie es beispielsweise in der EP-A-0 321 607 und in der EP-A-O 388 927 beschrieben ist, zu applizieren.

Die erfindungsgemäßen Überzugsmittel können auch als Basislacke, sowie auch als Füller formuliert werden. Sie eignen sich dann besonders gut zur Herstellung von Mehrschichtlackierungen, z.B. auf dem Kraftfahrzeugsektor. Zur Formulierung als Basislacke oder Füller können übliche Additive, wie sie z.B. vorstehend für Basislacke beschrieben wurden, zugesetzt werden.

Im Vergleich mit üblichen Basislacken ergeben die erfindungsgemäßen Basislacke insbesondere Überzüge mit einer verbesserten Feucht-Warm-Beständigkeit.

Die erfindungsgemäßen Basislacke können mit üblichen Klarlacken, naß-in-naß, gegebenenfalls nach kurzer Antrocknung, überlackiert werden. Bevorzugt werden sie mit Klarlacken auf der Basis der erfindungsgemäßen Überzugsmittel überlackiert.

In den folgenden Beispielen beziehen sich Teile (T) und Prozent auf das Gewicht, sofern nicht anders angegeben.

### Beispiel 1)

### Herstellung eines epoxyfunktionellen Harzes A

In einem 4-Liter-Dreihalskolben, der mit Rührer, Thermometer, Tropftrichter und einem Rückflußkühler versehen ist, werden 1250 T Xylol vorgelegt und unter Rühren auf Rückflußtemperatur (ca. 140°C) erhitzt.

Innerhalb von 5 h wird eine Mischung aus

| | |
|---|---|
| 750 T | Glycidylmethacrylat |
| 155 T | Styrol |
| 195 T | Butylacrylat |
| 100 T | Butylmethacrylat und |
| 50 T | Tert.-Butylperbenzoat |

zugetropft und anschließend 6 h nachpolymerisiert.

Das epoxyfunktionelle Harz hat einen Festkörpergehalt von 49,4 % (1 h, 150°C).

Für die Anwendung in einem wäßrigen Klarlack (Beispiel 7) wird das epoxyfunktionelle Harz im Vakuum auf einen Festkörpergehalt von 82,7 % eingeengt.

### Beispiel 2)

### Herstellung eines Polyesteroligomeren B

336,7 g Trimethylolpropan, 366,8 Adipinsäure und 297 g Hexandiol werden mit 5 g unterphosphoriger Säure in einem mit Rührer, Abscheider, Thermometer und Rückflußkühler versehenen 2-Liter-Dreihalskolben bei 180°C bis 230°C in der Schmelze auf eine Säurezahl von 20 verestert.

Anschließend wird unter Vakuum bis zu einer Säurezahl kleiner 1,5 kondensiert.

Das so enthaltene Produkt hat einen Einbrennrückstand von 94,5 % (1 h, 150°C), eine Viskosität von 3200 mPas (100 %ig), eine Hydroxylzahl von 460 und eine Farbzahl von 30 Hazen.

### Beispiel 3)

### Herstellung eines urethanisierten Polyesteroligomeren C

In einen 4-Liter-Dreihalskolben, der mit Rührer, Thermometer und einem Rückflußkühler versehen ist, werder 850 T des Polyesteroligomeren aus Beispiel 2) und 150 T Isophorondiisocyanat eingewogen und vorsichtig auf 80°C erhitzt.

Nach Beendigung der exothermen Reaktion wird das Harz bei 80°C auf eine NCO-Zahl kleiner 0,1 gefahren.

Nach Erreichen der NCO-Zahl werden 250 T Xylol zugegeben.

Das so erhaltene Produkt hat einen Einbrennrückstand von 77,5 % (1 h, 150°C), eine Viskosität von 3100 mPas, eine Hydroxylzahl von 320 mg KOH/g und eine Farbzahl von 25 Hazen.

### Beispiel 4

### Einführung der Carboxylgruppen in das urethanisierte Polyesteroligomer C aus Beispiel 3

Nach Herstellung des Produktes in Beispiel 3) werden 878 T Hexahydrophthalsäureanhydrid in einem 4-Liter-Dreihalskolben, der mit Rührer, Thermometer und einem Rückflußkühler versehen ist, zugemischt und bei 80°C bis auf eine konstante Säurezahl verestert.

Das carboxyfunktionelle Harz hat einen Einbrennrückstand von 88,3 % (1 h, 150°C), eine Viskosität von 3800 mPas, eine Säurezahl von 320 mg KOH/g (bezogen auf Festharz) und eine Farbzahl von 25 Hazen.

### Beispiel 5)

### Kettenverlängerung mit epsilon-Caprolacton

In der Apparatur aus Beispiel 4) werden innerhalb 30 Minuten 574 T epsilon-Caprolacton zu 1000 T des carboxyfunktionellen Harzes aus Beispiel 4 getropft. Die Umsetzung wird bei 140°C bis zum Erreichen des theoretischen Festkörpergehaltes durchgeführt.

Das kettenverlängerte urethangruppenhaltige carboxylfunktionelle Harz hat einen Festkörpergehalt von 92,6 % /1 h, 150°C), eine Säurezahl von 194 mg KOH/g und eine Viskosität von 53000 mPas (25°C).

### Beispiel 6)

### Herstellung einer Klarlackzusammensetzung

Zur Herstellung einer Klarlackzusammensetzung wird folgende Rezeptur verwendet

| | |
|---|---|
| 38,8 T | kettenverlängertes urethangruppenhaltiges carboxyfunktionelles Harz aus Beispiel 5) |
| 58,9 T | epoxyfunktionelles Harz aus Beispiel 1) |
| 2,3 T | Butyldiglykolacetat |

Der Festkörpergehalt der Klarlackzusammensetzung liegt bei 65,0 %.

Mit einer Rakel wird der Klarlack aus Beispiel 6) in einer Trockenfilmschichtdicke von ca. 40 µm auf eine Glasplatte appliziert und nach einer 10minütigen Ablüftphase bei Raumtemperatur 20 Minuten bei 140°C eingebrannt.

### Pendelhärte (König): 111 Schwingungen

| | |
|---|---|
| H₂SO₄ (10 %, 65°C) : | nach einer Einwirkungsdauer von 20 min ohne Markierung |
| Aussehen | glänzend |
| Xyloltest | nach 10minütigem Einwirken keine Markierung oder Quellung |

### Beispiel 7)

### Herstellung eines wäßrigen Klarlackes

### a) Herstellung einer wäßrigen Emulsion:

In einem 1-Liter-Kolben werden 128 T einer 10 %igen Lösung eines Emulgators auf der Basis eines Polyoxypropylenpolyoxyethylensorbitansäurediesters und 0,1 T eines handelsüblichen Entschäumers bei 60°C vorgelegt. Das Gemisch wird mit einem Rührer, der mit einer Geschwindigkeit von ca. 8500 Umdrehungen/min rotiert, gerührt. Innerhalb von 3 Minuten werden bei 60°C ein Gemisch aus 156 T carboxylfunktionellem Harz von Beispiel 5) (Festkörpergehalt: 92,6 %), 237 T epoxyfunktionellem Harz von Beispiel 1) (Festkörpergehalt: 82,7 %) sowie 23 T vollentsalztes Wasser zugegeben.

Die erhaltene milchig-weiße Emulsion hat einen Festkörpergehalt von 50,4 %.

### b) Wäßrige Klarlackzusammensetzung

| | |
|---|---|
| 500 T | Emulsion aus Beispiel 7a |
| 340 T | vollentsalztes Wasser |

Der wäßrige Klarlack hat einen Festkörpergehalt von 30 %. Er wird mit einer Spritzpistole (1,3 mm Düse) in einer Trockenfilmschichtdicke von ca. 40 µm auf blankes Eisenblech bzw. auf mit einer Mehrschichtlackierung mit Elektrotauchgrundierung, Füller und Wasserbasislack beschichtetem Eisenblech appliziert und nach einer 20minütigen Ablüftphase (10 min Raumtemperatur, 10 min 80°C) 20 Minuten bei 140°C eingebrannt.

Eigenschaften der eingebrannten Filme:

| | |
|---|---|
| auf Eisenblech | |
| Pendelhärter (König) | 107 Schwingungen |
| Im Aufbau | |
| Pendelhärte | 85 Schwingungen |
| H₂SO₄ (10 %, 65°C) | Nach einer Einwirkungsdauer von 20 min ohne Markierung |
| Gitterschnitt-Test | Kennwert 0-1 (sehr gut bis gut) |
| Xylol Test | nach 10minütigem Einwirken keine Markierung oder Quellung |

## Patentansprüche

1. Für Überzugsmittel geeignete Bindemittelzusammensetzung, enthaltend
A) 25 bis 75 Gew.-% des Umsetzungsproduktes eines oder mehrerer urethangruppenhaltiger carboxyfunktionalisierter (Meth)acrylcopolymerer und/oder eines oder mehrerer urethangruppenhaltiger carboxyfunktionalisierter Polyester, jeweils mit einer Säurezahl von 30 bis 200 mg KOH/g, mit einem oder mehreren Lactonen,
B) 25 bis 75 Gew.-% eines oder mehrerer epoxidfunktionalisierter Vernetzer mit mindestens zwei Epoxidfunktionen im Mokelül, mit einem Zahlenmittel des Molgewichtes (Mn) von 200 bis 10000 g/mol,
C) ggf. bis 60 Gew.-% eines oder mehrerer Polyole mit mindestens zwei Hydroxylfunktionen im Molekül,
D₁) 0 bis 20 Gew.-% eines oder mehrerer Melaminharze,
D₂) 0 bis 40 Gew.-% eines oder mehrerer freier oder verkappter Polyisocyanate, wobei sich die Summe der Gewichtsprozente der Komponente A), B), C), D₁) und D₂) auf 100 Gew.-% addiert, sowie
E) 0 bis 10 Gew.-% eines oder mehrerer Katalysatoren zur Katalyse der Reaktion von Carboxyl- und Epoxidgruppen, bezogen auf die Summe der Gewichte der Komponenten A) bis D₂).

2. Bindemittelzusammensetzung nach Anspruch 1, worin die urethangruppenhaltigen carboxyfunktionalisierten (Meth)acrylcopolymere ein Zahlenmittel des Molgewichts (Mn) von 500 bis 10000 g/mol und die urethangruppenhaltigen carboxyfunktionalisierten Polyester ein errechnetes Molgewicht von 500 bis 4000 g/mol aufweisen.

3. Bindemittelzusammensetzung nach Anspruch 1 oder 2, worin die Harze der Komponenten A) und B) zumindest teilweise präkondensiert sind.

4. Bindemittelzusammensetzung nach einem der vorhergehenden Ansprüche, dadurch gekennzeichnet, daß die Komponente B) ganz oder teilweise in Gegenwart zumindest eines Teils der Komponente C) hergestellt wurde.

5. Bindemittelzusammensetzung nach Anspruch 4, dadurch gekennzeichnet, daß es sich bei der Komponente C) um einen hydroxyfunktionellen Polyester handelt.

6. Überzugsmittel, enthaltend die Bindemittelzusammensetzung nach einem der Ansprüche 1 bis 5.

7. Überzugsmittel nach Anspruch 6 in Form eines lösemittelhaltigen Lackes.

8. Überzugsmittel nach Anspruch 7 mit einem Lösemittelgehalt von 2 bis 60 Gew.-%.

9. Überzugsmittel nach Anspruch 6, das Wasser und gegebenenfalls ein oder mehrere organische Lösemittel enthält.

10. Überzugsmittel nach Anspruch 6 in der Form eines Pulverlackes.

11. Überzugsmittel nach einem der Ansprüche 6 bis 10 in der Form eines pigmentfreien und füllstoffreien, gegebenenfalls lackübliche Hilfs- und Zusatzstoffe enthaltenden Klarlackes.

12. Überzugsmittel nach einem der Ansprüche 6 bis 10 in der Form eines Pigmente, Füllstoffe und/oder lackübliche Hilfs- und Zusatzstoffe enthaltenden Deck- oder Basislackes.

13. Verfahren zur Herstellung eines Überzugsmittels nach einem der Ansprüche 6 bis 9, 11 und 12, dadurch gekennzeichnet, daß man eine Bindemittelzusammensetzung nach einem der Ansprüche 1 bis 5 in einem oder mehreren organischen Lösemitteln und/oder Wasser, gegebenenfalls nach Teilneutralisation der vorhandenen Carboxylgruppen, löst oder dispergiert und vor oder nach dem Lösen oder Dispergieren mit lacküblichen Hilfs- und Zusatzstoffen, Pigmenten und/oder Füllstoffen vermischt.

14. Verwendung der Überzugsmittel nach einem der Ansprüche 6 bis 10 und 12 in pigmenthaltiger Form zur Herstellung von ein- oder mehrschichtigen Lackierungen.

15. Verwendung der Überzugsmittel nach Anspruch 11 in pigmentfreier Form zur Herstellung von Klarlackschichten.

16. Verwendung der Überzugsmittel nach einem der Ansprüche 6 bis 10 und 11 in pigmenthaltiger Form zur Herstellung von Basislackschichten.

17. Verwendung der Überzugsmittel nach einem der Ansprüche 6 bis 12 zur Herstellung von Füllerschichten und/oder Basislackschichten und/oder Klarlackschichten in Mehrschichtlackierungen.

18. Verwendung der Überzugsmittel nach einem der Ansprüche 6 bis 12 zur Herstellung von Mehrschichtlackierungen auf dem Kraftfahrzeugsektor.

## Claims

1. A binder vehicle composition suitable for coating media, containing
A) 25 to 75 % by weight of the reaction product of one or more carboxy-functionalised (meth)acrylic copolymers which contain urethane groups and/or of one or more carboxy-functionalised polyesters which contain urethane groups, each with an acid number of 30 to 200 mg KOH/g, with one or more lactones,
B) 25 to 75 % by weight of one or more epoxide-functionalised crosslinking agents which have at least two epoxide functions in their molecule and which have a number average molecular weight (Mn) of 200 to 10,000 g/mole,
C) optionally up to 60 % by weight of one or more polyols having at least two hydroxyl functions in their molecule,
D₁) 0 to 20 % by weight of one or more melamine resins,
D₂) 0 to 40 % by weight of one or more free or capped polyisocyanates, wherein the sum of the percentages by weight of components A), B), C), D₁) and D₂) adds up to 100 % by weight, and containing
E) 0 to 10 % by weight, with respect to the sum of the weights of components A) to D₂), of one or more catalysts for the catalysis of the reaction of carboxyl and epoxide groups.

2. A binder vehicle composition according to claim 1, wherein the carboxy-functionalised (meth)acrylic copolymers which contain urethane groups have a number average molecular weight (Mn) of 500 to 10,000 g/mole and the carboxy-functionalised polyesters which contains urethane groups have a calculated molecular weight of 500 to 4000 g/mole.

3. A binder vehicle composition according to claims 1 or 2, wherein the resins of components A) and B) are at least partially precondensed.

4. A binder vehicle composition according to any one of the preceding claims, characterised in that component B) was produced completely or in part in the presence of at least part of component C).

5. A binder vehicle composition according to claim 4, characterised in that component C) is a hydroxy-functional polyester.

6. A coating medium containing the binder vehicle composition according to any one of claims 1 to 5.

7. A coating medium according to claim 6 in form of a solvent-containing lacquer.

8. A coating medium according to claim 7 with a solvent content of 2 to 60 % by weight.

9. A coating medium according to claim 6 which contains water and optionally one or more organic solvents.

10. A coating medium according to claim 6 in the form of a powder coating.

11. A coating medium according to any one of claims 6 to 10 in the form of a pigment-free and extender-free clear lacquer which optionally contains customary lacquer adjuvant substances and additives.

12. A coating medium according to any one of claims 6 to 10 in the form of a covering lacquer or base lacquer which contains pigments, extenders and/or customary lacquer adjuvant substances and additives.

13. A method of producing a coating medium according to any one of claims 6 to 9, 11 and 12, characterised in that a binder vehicle composition according to any one of claims 1 to 5 is dissolved or dispersed in one or more organic solvents and/or water, optionally after partial neutralisation of the carboxyl groups present, and is mixed, before or after dissolution or dispersion, with customary lacquer adjuvant substances and additives, pigments and/or extenders.

14. The use of the coating media according to any one of claims 6 to 10 and 12 in pigment-containing form for the production of single- or multi-layer coatings.

15. The use of the coating media according to claim 11 in pigment-free form for the production of clear lacquer coats.

16. The use of the coating media according to any one of claims 6 to 10 and 11 in pigment-containing form for the production of base lacquer coats.

17. The use of the coating media according to any one of claims 6 to 12 for the production of primer-surfacer coats and/or base lacquer coats and/or clear lacquer coats in multi-layer coatings.

18. The use of the coating media according to any one of claims 6 to 12 for the production of multi-layer coatings in the motor vehicle sector.

## Revendications

1. Composition de liant approprié pour agent de revêtement contenant,
A) de 25 à 75% en poids du produit de la réaction d'un ou plusieurs copolymères (méth)acryliques carboxy-fonctionnalisés contenant des groupes uréthanes, et/ou d'un ou plusieurs polyesters carboxy-fonctionnalisés contenant des groupes uréthanes, toujours avec un indice d'acide de 30 à 200 mg de KOH/g, avec une plusieurs lactones,
B) de 25 à 75% en poids d'un ou plusieurs agents réticulants époxydo-fonctionnalisés avec au moins deux fonctions époxydes dans la molécule avec une moyenne en nombre du piods moléculaire (Mn) de 200 à 10 000 g/mole,
C) le cas échéant jusqu'à 60% en poids d'un ou plusieurs polyols avec au moins deux fonctions hydroxyles dans la molécule,
D₁) de 0 à 20% en poids d'une polyol résine mélamine,
D₂) de 0 à 40% en poids d'un ou plusieurs polyisocyanates libres ou masqués, la somme des pourcentages pondéraux des composants A), B), C), D₁) et D₂) se complétant à 100%, ainsi que
E) de 0 à 10% en poids d'un ou plusieurs catalyseurs pour la catalyse de la réaction des groupes carboxyles et époxydes, pour la somme des poids des composants A) à D₂).

2. Composition de liant selon la revendication 1, dans laquelle les copolymères (méth)acryliques carboxy-fonctionnalisés contenant des groupes uréthanes ont une moyenne en nombre de poids moléculaire (Mn) de 500 à 10 000 g/mole et les polyesters carboxy-fonctionnalisés contenant des groupes uréthanes présentent un poids moléculaire calculé de 500 à 4000 g/mole.

3. Composition de liant selon la revendication 1 ou 2 dans laquelle les résines des composants A) et B) sont au moins partiellement précondensées.

4. Composition de liant selon l'une des revendications précédentes, caractérisée en ce que le composant B) a été ou entièrement préparé en présence d'au moins une partie du composant C).

5. Composition de liant selon la revendication 4, caractérisée en ce que, pour le composant C), il s'agit d'un polyester à fonction hydroxy.

6. Revêtement contenant la composition de liant selon l'une des revendications 1 à 5.

7. Revêtement selon la revendication 6 sous la forme d'un vernis contenant un solvant.

8. Revêtement selon la revendication 7 ayant une teneur en solvant de 2 à 60% en poids.

9. Revêtement selon la revendication 6, qui contient de l'eau et le cas échéant un ou plusieurs solvants organiques.

10. Revêtement selon la revendication 6 sous la forme d'un vernis pulvérulent.

11. Revêtement selon l'une des revendications 6 à 10 sous la forme d'un vernis clair dépourvu de pigment et de charge, contenant le cas échéant les adjuvants et additifs pour vernis habituels.

12. Revêtement selon l'une des revendications 6 à 10 sous la forme d'un vernis de recouvrement ou de base contenant des pigments, des charges, et/ou des adjuvants et additifs pour vernis habituels.

13. Procédé de préparation d'un revêtement selon l'une des revendications 6 à 9, 11 et 12, caractérisé en ce qu'on dissout ou en ce qu'on disperse une composition de liant selon l'une des revendications 1 à 5 dans un ou plusieurs solvants organiques et/ou de l'eau, éventuellement après neutralisation partielle des groupes carboxy présents et en ce qu'on mélange avant ou après la dissolution ou la dispersion à des adjuvants et additifs,pigments et/ou charges de vernis habituels.

14. Utilisation des revêtements selon l'une des revendications 6 à 10 et 12 sous une forme contenant un pigment pour la préparation de vernis à une ou plusieurs couches.

15. Utilisation des revêtements selon la revendication 11 sous une forme dépourvue de pigments pour la préparation de couches de vernis transparents.

16. Utilisation des revêtements selon les revendications 6 à 10 et 11 sous une forme contenant un pigment pour la préparation de couches de vernis de base.

17. Utilisation des revêtements selon l'une des revendications 6 à 12 pour la préparation de couches de produits de charge et/ou de couches de base et/ou de couches de vernis transparents dans des revêtements de vernis à plusieurs couches.

18. Utilisation des revêtements selon l'une des revendications 6 à 12 pour la préparation de revêtements à plusieurs couches dans le secteur des véhicules automobiles.
